# EUROPEAN PATENT APPLICATION

(11) **EP 4 109 650 A2**
(43) Date of publication of application: **28.12.2022**
(21) Application number: 22179722.8
(22) Date of filing: 17.06.2022
(51) Int. Cl.: H01M 50/204, H01M 50/296, H01M 50/503, H01M 50/529

(54) **BATTERY PACK**

(30) Priority: 21.06.2021 KR 20210080360
(71) Applicant: Samsung SDI Co., Ltd., Yongin-si, Gyeonggi-do 17084 (KR)
(72) Inventor: KANG, Iloh, 17084 Yongin-si (KR)
(74) Representative: Marks & Clerk LLP

(57) **Abstract**

A battery pack includes a battery unit (200); a housing (100) including an inner portion and an outer portion, the battery unit (200) being accommodated in the inner portion, the outer portion including a service terminal (300) therein that is electrically connected to the battery unit (200); a bus bar (150) including a first end (151) and a second end (152), the first end (151) being in the inner portion of the housing (100) and connected to the battery unit (200), the second end (152) being in the outer portion of the housing (100) and connected to the service terminal (300) such that at least a portion of the bus bar (150) is buried in the housing (100); a first sealing portion (10) sealing the battery unit (200) and the first end (151) of the bus bar (150); and a second sealing portion (20) sealing the service terminal (300) and the second end (152) of the bus bar (150).

## Description

### BACKGROUND

### 1. Field

Embodiments relate to a battery pack.

### 2. Description of the Related Art

Generally, a secondary battery is a battery that is recharged and discharged, unlike a primary battery that is not rechargeable. A secondary battery may be used as an energy source of a mobile device, an electric vehicle, a hybrid vehicle, an electric bicycle, an uninterruptible power supply, or the like, and may be used in the form of a single battery or as a pack in which a plurality of batteries are grouped in a unit, according to a type of an external device to which the secondary battery is applied.

A small mobile device, such as a cellular phone, may operate for a predetermined period of time with the output and capacity of a single battery.

### SUMMARY

The embodiments may be realized by providing a battery pack including a battery unit; a housing including an inner portion and an outer portion, the battery unit being accommodated in the inner portion, the outer portion including a service terminal therein that is electrically connected to the battery unit; a bus bar including a first end and a second end, the first end being in the inner portion of the housing and connected to the battery unit, the second end being in the outer portion of the housing and connected to the service terminal such that at least a portion of the bus bar is buried in the housing; a first sealing portion sealing the battery unit and the first end of the bus bar; and a second sealing portion sealing the service terminal and the second end of the bus bar.

The bus bar may further include a main body connecting between the first end and the second end, and the main body of the bus bar may be buried in the housing.

The bus bar may be integrally formed with the housing.

The first end, the second end, and the main body of the bus bar may be supported by different portions of the housing.

The housing may further include a first step-difference block and a second step-difference block having different heights from each other and providing an upper surface having a step-difference.

The first step-difference block and the second step-difference block may be adjacent to each other and contact each other.

The housing may further include walls defining an accommodation space in which the battery unit is accommodated, and the walls, the first step-difference block, and the second step-difference block may be sequentially adjacent to each other to contact each other in an inward direction from the walls toward the accommodation space.

The first end of the bus bar may be supported on the first step-difference block, and the second end of the bus bar may be supported on the second step-difference block.

The main body of the bus bar may be buried in the first step-difference block, and the first end and the second end of the bus bar may be bent from the main body of the bus bar in directions opposite to each other, respectively, so as to be supported on the first step-difference block and the second step-difference block, respectively.

The main body of the bus bar may extend within the first step-difference block and in parallel with the first step-difference block.

The first end of the bus bar may be on an upper surface of the first step-difference block, and the second end of the bus bar may be on a lower surface of the second step-difference block.

An upper surface of the first end of the bus bar that faces the inner portion of the housing and faces away from the first step-difference block may be exposed at the inner portion of the housing, a lower surface of the first end may be buried in the first step-difference block, a lower surface of the second end of the bus bar that faces the outer portion of the housing and faces away from the second step-difference block may be exposed at the outer portion of the housing, and an upper surface of the second end may be buried in the second step-difference block.

An upper surface of the first step-difference block may form a part of an inner surface of the housing, and a lower surface of the second step-difference block may form a part of an outer surface of the housing.

The battery pack may further include a first clamping portion configured to fix a location of the first end of the bus bar, the first clamping portion extending inwardly from an upper surface of the first step-difference block to a predetermined coupling depth, the first end of the bus bar being on the upper surface of the first step-difference block.

The first clamping portion may include a screw thread therein, the first clamping portion being configured to form a screw joint with a clamping member penetrating through the first end of the bus bar.

The battery pack may further include a second clamping portion configured to fix a location of the second end of the bus bar, the second clamping portion extending inwardly from a lower surface of the second step-difference block to a predetermined coupling depth, the second end of the bus bar being on the lower surface of the second step-difference block.

The first clamping portion and the second clamping portion may be not vertically overlapped each other.

The housing may include a step-difference block that has an upper surface and a lower surface having a step-difference with respect to each other.

The first end of the bus bar may be supported on the upper surface of the step-difference block, and the second end of the bus bar may be supported on the lower surface of the step-difference block.

The main body of the bus bar may be buried in the step-difference block, the first end of the bus bar may extend from the main body of the bus bar in a same direction as the main body of the bus bar and is exposed at the upper surface of the step-difference block, and the second end of the bus bar may extend from the main body of the bus bar in a same direction as the main body of the bus bar and is exposed at the lower surface of the step-difference block.

The battery pack may further include a cover covering the inner portion of the housing, in which the battery unit is accommodated, wherein the first sealing portion seals the battery unit by being between the cover and the housing.

The battery pack may further include a cover of the service terminal covering the outer portion of the housing, in which the service terminal is arranged, wherein the second sealing portion seals the service terminal by being between the outer portion of the housing and the cover of the service terminal.

A first projection area of the first sealing portion and a second projection area of the second sealing portion may overlap with each other at a first overlap area.

Each of the first projection area of the first sealing portion and the second projection area of the second sealing portion may include a second area not overlapping each other.

The second area of the first projection area of the first sealing portion and the second area of the second projection area of the second sealing portion may be at opposite sides to the first overlap area.

At least some of the above and other features of the invention are set out in the claims.

### BRIEF DESCRIPTION OF THE DRAWINGS

Features will be apparent to those of skill in the art by describing in detail embodiments with reference to the attached drawings in which:
FIG. 1 is an exploded perspective view of a battery pack according to an embodiment;
FIG. 2 is an exploded perspective view of a portion of the battery pack illustrated in FIG. 1;
FIG. 3 is a perspective view of a battery unit illustrated in FIG. 1;
FIG. 4 is a perspective view of a portion of a housing illustrated in FIG. 1;
FIG. 5 is a cross-sectional view of the portion of the housing of FIG. 4, taken along a line V-V;
FIG. 6 is an exploded perspective view of a battery pack according to an embodiment and illustrates an arrangement of a first sealing portion and a second sealing portion;
FIGS. 7 and 8 are views of the arrangement of the first sealing portion and the second sealing portion of FIG. 6, from the perspective of a direction VII and a direction VIII, respectively;
FIG. 9 is a perspective view of an arrangement of a bus bar and first and second sealing portions;
FIG. 10 is a view projecting the first and second sealing portions illustrated in FIG. 9 on a virtual first plane;
FIG. 11 is a perspective view of a housing applicable to a battery pack, according to another embodiment;
FIG. 12 is a cross-sectional view of the housing of FIG. 11, taken along a line XII-XII;
FIG. 13 is a perspective view of a bus bar illustrated in FIG. 12;
FIG. 14 is a view of the first and second sealing portions illustrated in FIG. 11, the first and second sealing portions being projected on a virtual first plane;
FIG. 15 is a perspective view of a housing applicable to a battery pack, according to another embodiment;
FIG. 16 is a cross-sectional view of the housing of FIG. 15, taken along a line XVI-XVI; and
FIG. 17 is a perspective view of a bus bar illustrated in FIG. 16.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the terms "or" and "and/or" are not exclusive terms, and include any and all combinations of one or more of the associated listed items e.g., "A or B" would include A, B, or A and B. Expressions such as "at least one of," when preceding a list of elements, modify the entire list of elements and do not modify the individual elements of the list.

Hereinafter, a battery pack according to one or more embodiments is described with reference to the accompanying drawings.

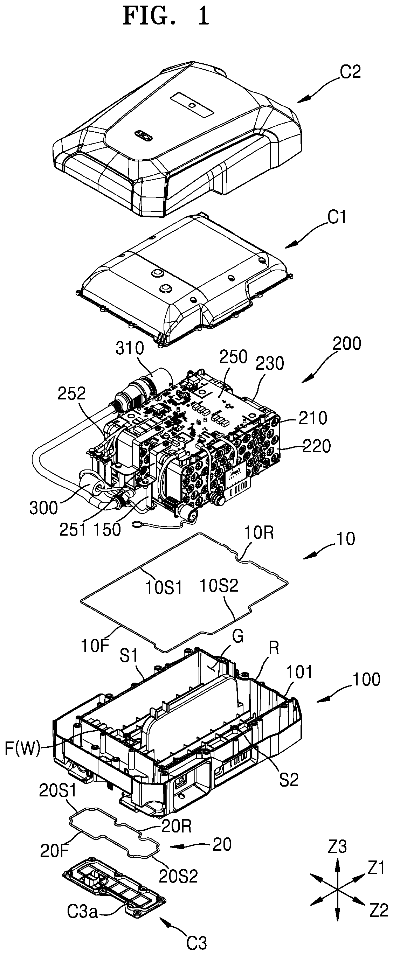

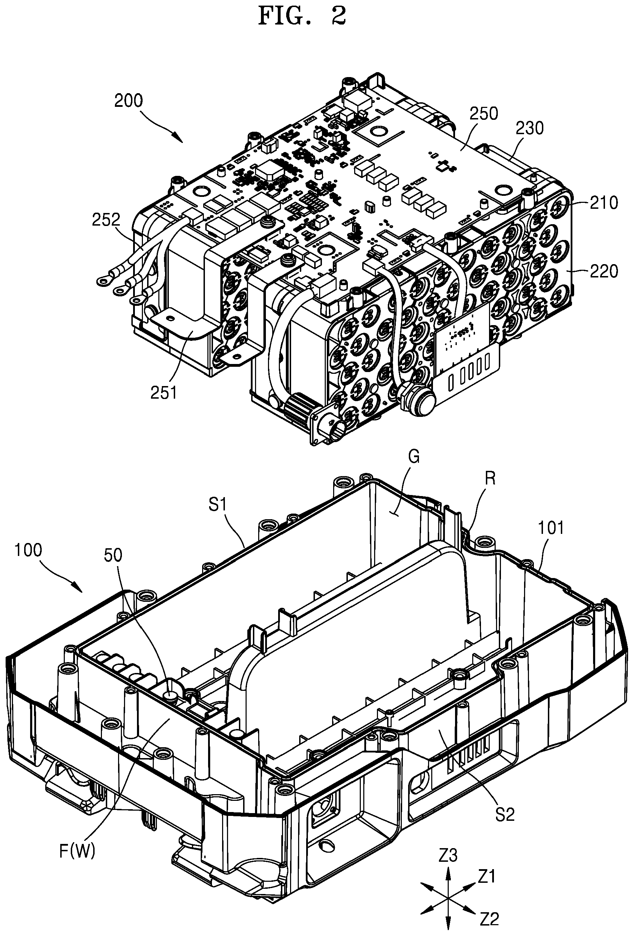

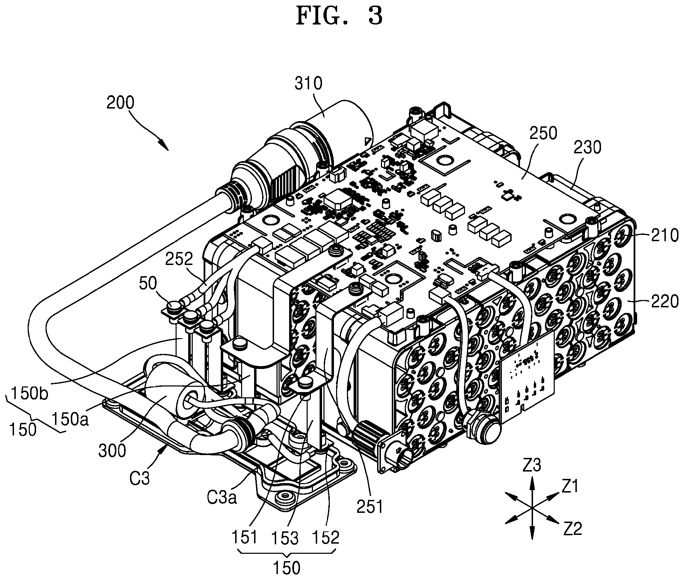

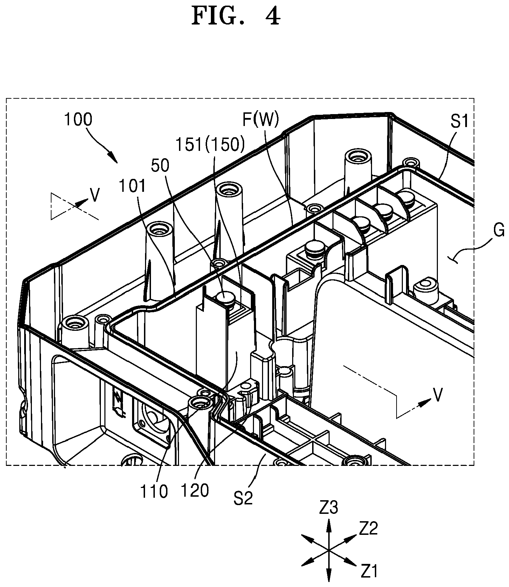

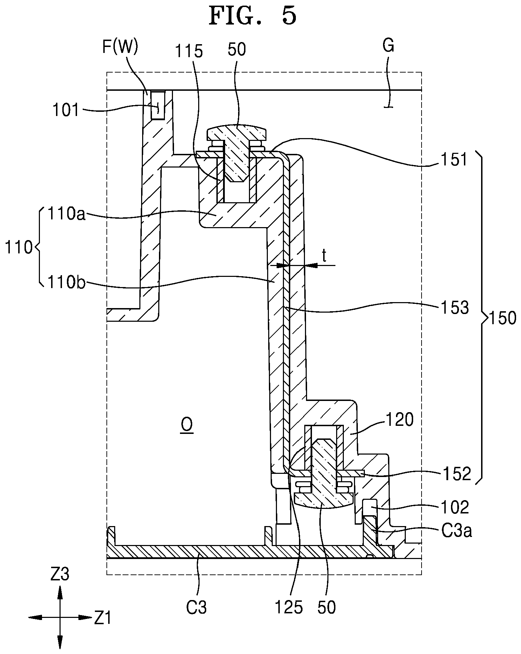

FIG. 1 is an exploded perspective view of a battery pack according to an embodiment. FIG. 2 is an exploded perspective view of a portion of the battery pack illustrated in FIG. 1. FIG. 3 is a perspective view of a battery unit 200 illustrated in FIG. 1. FIG. 4 is a perspective view of a portion of a housing 100 illustrated in FIG. 1. FIG. 5 is a cross-sectional view of the portion of the housing 100 of FIG. 4, taken along a line V-V.

Referring to FIGS. 1 through 5, the battery pack according to an embodiment may include the battery unit 200 and the housing 100 accommodating the battery unit 200. In an implementation, the battery pack may include a cover C1 assembled or coupled to the housing 100 with the battery unit 200 therebetween so as to close an accommodation space G in which the battery unit 200 is accommodated and may further include an external member C2 coupled to the housing 100 with both of the battery unit 200 and the cover C1 therebetween. The cover C1 and the external member C2 may be coupled with the housing 100 so as to dually seal the accommodation space G in an inner portion of the housing 100. In an implementation, the battery pack may include the cover C1 and the external member C2 coupled to the housing 100 (e.g., above or on one side of the housing 100) to cover the accommodation space G, and may further include a cover C3 of a service terminal 300 coupled to the housing 100 (below or on another side of the housing 100).

The battery unit 200 may include a plurality of battery cells 210 (for being electrically connected to an external device and for performing charging and discharging operations) and may include a circuit substrate 250 for controlling the charging and discharging operations of the plurality of battery cells 210.

In an implementation, the battery unit 200 may include the plurality of battery cells 210 and a holder 230 accommodating the plurality of battery cells 210, and the plurality of battery cells 210 included in the battery unit 200 may be electrically connected to each other through a tab plate 220 and may be structurally coupled with each other by being accommodated in the holder 230. In an implementation, the battery cell 210 may include a circular battery cell. In an implementation, the battery cell 210 may include a square battery cell or a circular battery cell.

In an implementation, the battery unit 200 may include the plurality of battery cells 210 according to a desired output and capacity. In an implementation, the battery unit 200 may include a plurality of serially connected battery cells 210, a plurality of parallelly connected battery cells 210, or a plurality of battery cells 210 which are both serially and parallelly connected, according to the desired output and capacity. In an implementation, the battery unit 200 may include the tab plate 220 for electrically connecting the plurality of battery cells 210 with each other, and the tab plate 220 may parallelly connect the plurality of battery cells 210 by connecting the same polarities of electrodes at ends of adjacent battery cells 210 or serially connect the plurality of battery cells 210 by connecting the opposite polarities of electrodes at ends of adjacent battery cells 210. The battery unit 200 including the plurality of battery cells 210 electrically connected with each other through the tab plate 220 may be connected to an input and output terminal 310 through the circuit substrate 250 through which charge and discharge current of the battery unit 200 may be input and output.

The charge and discharge current of the battery unit 200 may be input or output via the circuit substrate 250, and the circuit substrate 250 may control charging and discharging operations of the battery unit 200. In an implementation, the circuit substrate 250 may in on a charge and discharge path of the battery unit 200 and may include a switch device or the like, which may block the charge and discharge path of the battery unit 200 in an abnormal situation, such as an overheated, overcharged, or over-discharged situation. In an implementation, the circuit substrate 250 may receive state information of the battery unit 200, such as a temperature, a current, a voltage, or the like, and control the charging and discharging operations of the battery unit 200 based on the received state information.

A connection bar 251 may be connected to a side of the circuit substrate 250, and the circuit substrate 250 may be connected to the input and output terminal 310 through the connection bar 251 and a bus bar 150 electrically connected with each other. In an implementation, the discharge current of the battery unit 200 may pass through the connection bar 251 coupled to a side of the circuit substrate 250 and may be supplied into an external load from the input and output terminal 310, through the connection bar 251 and the bus bar 150 (corresponding to a first bus bar 150a, see FIG. 3), and the charge current of the battery unit 200 may be supplied to the battery unit 200 from the input and output terminal 310 connected to an external charger, through the bus bar 150 and the connection bar 251. In an implementation, the connection bar 251 and the bus bar 150 may be connected to each other through abutting joint portions of the connection bar 251 and the bus bar 150 to each other and may be coupled to each other through a clamping member 50.

A connection cable 252 may be connected to another side of the circuit substrate 250, and the circuit substrate 250 may be connected to the input and output terminal 310 through the connection cable 252 and the bus bar 150 electrically connected with each other. In an implementation, the state information of the battery unit 200 may be transferred through the connection cable 252 coupled to the other side of the circuit substrate 250 and may be provided to an external device from the input and output terminal 310 by passing through the connection cable 252 and the bus bar 150 (corresponding to a second bus bar 150b, see FIG. 3). In an implementation, the connection cable 252 and the bus bar 150 may be connected to each other through abutting joint portions of the connection cable 252 and the bus bar 150 to each other and may be coupled to each other through the clamping member 50.

The bus bar 150 may be fixed in a state in which at least a portion thereof is buried in or within the housing 100, and the connection bar 251 coupled to a side of the circuit substrate 250 may be coupled to the bus bar 150 buried in the housing 100 via the clamping member 50. In an implementation, the connection cable 252 coupled to another side of the circuit substrate 250 may be coupled to the bus bar 150 buried in the housing 100 via the clamping member 50. Referring to FIG. 3, the bus bar 150 may include a first end 151, a second end 152, and a main body 153, wherein the first end 151, which is an end of the bus bar 150, may be in the accommodation space G (accommodating the battery unit 200) so as to be coupled to the connection bar 251 or the connection cable 252, the second end 152, which is the other end of the bus bar 150, may be outside the accommodation space G, and the main body 153 may be buried in the housing 100 to connect the first end 151 with the second end 152. In an implementation, the bus bar 150 may include at least a portion that is buried in the housing 100, so that the first end 151 in the accommodation space G and electrically connected with the battery unit 200 may be connected with the second end 152 outside the accommodation space G to form the charge and discharge path of the battery unit 200. In an implementation, the bus bar 150 including at least the portion buried in the housing 100 may be provided as at least two bus bars. In an implementation, the bus bar 150 may include the first bus bar 150a (see FIG. 3) connected to the circuit substrate 250 through the connection bar 251 to form a path of high current, such as charge and discharge current of the battery unit 200. In an implementation, the bus bar 150 may include the second bus bar 150b (see FIG. 3) connected to the circuit substrate 250 through the connection cable 252 to form a path of low current for the transfer of the state information. Hereinafter, the bus bar 150 may selectively denote any one of the first and second bus bars 150a and 150b or may inclusively denote both of the first and second bus bars 150a and 150b. Also, the technical aspects of the bus bar 150 may be applied to any one of the first and second bus bars 150a and 150b or may be commonly applied to both of the first and second bus bars 150a and 150b. In an implementation, the first and second bus bars 150a and 150b may have substantially the same structure and arrangement as each other, and the technical aspects of the bus bar 150 described hereinafter may be commonly applied to both of the first and second bus bars 150a and 150b.

The housing 100 may provide the accommodation space G in which the battery unit 200 is accommodated and may include walls W surrounding the accommodation space G to define the accommodation space G. In an implementation, with respect to the housing 100, the cover C1 may be coupled with the housing 100 with the battery unit 200 therebetween to close the accommodation space G, and the external member C2 may be coupled with the housing 100 with both of the battery unit 200 and the cover C1 therebetween. The walls W of the housing 100 may denote a portion coupled with the cover C1 to close the accommodation space G.

In an implementation, the housing 100 may include a front wall F, a rear wall R, and first and second side walls S1 and S2 connected to each other to surround the accommodation space G. In an implementation, the housing 100 may include, e.g., a pair of the front wall F and the rear wall R facing each other in a long side direction Z1 and forming short side portions defining the accommodation space G; and the first and second side walls S1 and S2 facing each other in a short side direction Z2 and forming long side portions defining the accommodation space G. In an implementation, the housing 100 may provide the accommodation space G having an approximately rectangular shape with the pair of the front wall F and the rear wall R facing each other as the short side portions and the first and second side walls S1 and S2 facing each other as a pair of long side portions.

Referring to FIGS. 4 and 5, first and second step-difference blocks 110 and 120 having a step difference with respect to each other in a height direction Z3 may be supported by or on the walls W of the housing 100, and the first and second step-difference blocks 110 and 120 may have different heights from each other to form an upper surface having a step-difference. In this specification, the height direction Z3 may denote a direction in which the battery unit 200 and the housing 100 are assembled to each other. An upper surface may denote a surface toward or facing a relatively upper location of corresponding components in the height direction Z3, e.g., the location at which the battery unit 200 is arranged, and which is relatively upper between the locations at which the battery unit 200 and the housing 100 assembled to each other are located, and a lower surface may denote a surface toward or facing a relatively lower location of corresponding components in the height direction Z3, e.g., the location at which the housing 100 is arranged, and which is relatively lower between the locations at which the battery unit 200 and the housing 100 assembled to each other are located.

In an implementation, the first and second step-difference blocks 110 and 120 may be supported by the front wall F of the housing 100 and may form an upper surface having a step-difference from the front wall F toward the accommodation space G. In an implementation, that the first and second step-difference blocks 110 and 120 may form the upper surface having the step-difference may denote that the first and second step-difference blocks 110 and 120 may be adjacent to each other and not overlap each other, so that upper surfaces of both of the first and second step-difference blocks 110 and 120 may both be upwardly exposed. In an implementation, the first and second step-difference blocks 110 and 120 may be adjacent to each other and may be not overlapped with each other. In an implementation, the upper surfaces of the first and second step-difference blocks 110 and 120 may both be upwardly exposed while being adjacent to each other and not overlapping each other. In an implementation, the first and second step-difference blocks 110 and 120 may be adjacent to each other and may contact each other. In an implementation, the front wall F and the first and second step-difference blocks 110 and 120 may be generally adjacent to each other and may form the upper surface having the step-difference. In an implementation, the first step-difference block 110 may be directly supported by (e.g., adjacent to) the front wall F and may contact the front wall F, and the second step-difference block 120 (contacting the first step-difference block 110) may be indirectly supported by the front wall F through the first step-difference block 110. In an implementation, the front wall F, the first step-difference block 110, and the second step-difference block 120 may be sequentially arranged from the front wall F inwardly toward the accommodation space G, and thus, the front wall F, the first step-difference block 110, and the second step-difference block 120 may form an outline or profile having a step-difference, e.g., the upper surface having the step-difference. In an implementation, with respect to the height direction Z3, heights of the front wall F, the first step-difference block 110, and the second step-difference block 120 may sequentially decrease in this stated order, and thus, the upper surface of the front wall F, the first step-difference block 110, and the second step-difference block 120 may generally form the outline or profile having the step-difference.

In an implementation, the upper surfaces of the first and second step-difference blocks 110 and 120 may be exposed to an inner portion of the housing 100 (e.g., corresponding to an inner portion of the accommodation space G), and lower surfaces of the first and second step-difference blocks 110 and 120 may be not exposed to the inner portion of the housing 100 (e.g., does not face the accommodation space G) and instead may be exposed to an outer portion O of the housing 100. Throughout this specification, the inner portion of the housing 100 may denote the inner portion of the housing 100 that is toward or faces the accommodation space G, based on the walls W of the housing 100, and the outer portion O of the housing 100 may denote the outer portion O of the housing 100 that is opposite to the accommodation space G, based on the walls W of the housing 100. In an implementation, the housing 100 may include the walls W surrounding the accommodation space G, and the walls W may extend across the inner portion and the outer portion of the accommodation space G thus to define the inner portion of the housing 100 toward the inner portion of the accommodation space G and the outer portion O of the housing 100 that is opposite to the accommodation space G.

In an implementation, the first and second step-difference blocks 110 and 120 may extend from an upper surface in the inner portion of the housing 100 to a lower surface in the outer portion O of the housing 100 and may form a portion of the housing 100, the portion defining or separating the inner portion and the outer portion O of the housing 100. In an implementation, the bus bar 150 may be buried in the first and second step-difference blocks 110 and 120, e.g., the bus bar 150 may be buried in the portion of the housing 100 including the first and second step-difference blocks 110 and 120.

In an implementation, the upper surface of the first step-difference block 110 may be exposed at or face the inner portion of the housing 100 and may support the first end 151 of the bus bar 150, in the inner portion of the housing 100. In an implementation, the lower surface of the second step-difference block 120 may be exposed at or face the outer portion O of the housing 100 and may support the second end 152 of the bus bar 150, at the outer portion O of the housing 100. In an implementation, the bus bar 150 may include the first end 151 in the inner portion of the housing 100 and the second end 152 in the outer portion O of the housing 100 and may electrically connect between the battery unit 200 accommodated in the inner portion of the housing 100 and the service terminal 300 in the outer portion O of the housing 100. Throughout this specification, the inner portion of the housing 100 may denote the inner portion of the housing 100 that faces the inner portion of the accommodation space G (in which the battery unit 200 is accommodated), and the outer portion O of the housing 100 may denote the outer portion O of the housing 100 that is opposite to the accommodation space G. In an implementation, the upper surface of the first and second step-difference blocks 110 and 120 may form (e.g., a part of) an inner surface of the housing 100 that faces the accommodation space G and the lower surface of the first and second step-difference blocks 110 and 120 may form (e.g., a part of) an outer surface of the housing 100 that is opposite to the accommodation space G. In an implementation, the upper surface of the first and second step-difference blocks 110 and 120 (e.g., of the inner surface of the housing 100) may form an outline or a profile having a step-difference with respect to each other, and similarly, the lower surface of the first and second step-difference blocks 110 and 120 (e.g., of the outer surface of the housing 100) may form an outline or profile having a step-difference with respect to each other.

In an implementation, the first end 151 of the bus bar 150 may be supported on the upper surface of the first step-difference block 110, and the second end 152 of the bus bar 150 may be supported on the lower surface of the second step-difference block 120. In an implementation, the first end 151 of the bus bar 150 may be supported on the upper surface of the first step-difference block 110. In an implementation, the first end 151 of the bus bar 150 may be on the upper surface of the first step-difference block 110 to be exposed through or at the upper surface of the first step-difference block 110. In an implementation, the first end 151 exposed at the upper surface of the first step-difference block 110 may form an electrical connection with the battery unit 200. In an implementation, the first end 151 of the bus bar 150 may be on the upper surface of the first step-difference block 110 in the inner portion of the housing 100 and may form the electrical connection with the battery unit 200 in the inner portion of the housing 100.

In an implementation, the second end 152 of the bus bar 150 may be supported on the lower surface of the second step-difference block 120. In an implementation, the second end 152 of the bus bar 150 may be on the lower surface of the second step-difference block 120 to be exposed through or at the lower surface of the second step-difference block 120. In an implementation, the second end 152 exposed through the lower surface of the second step-difference block 120 may form an electrical connection with the service terminal 300. In an implementation, the second end 152 of the bus bar 150 may be on the lower surface of the second step-difference block 120 (e.g., at the outer portion O of the housing 100) and may form the electrical connection with the service terminal 300 in the outer portion O of the housing 100. In an implementation, the service terminal 300 may be a component at the outer portion O of the housing 100 for convenience of maintenance with respect to checks for repairing, replacement, or the like. In an implementation, the service terminal 300 may include a current block device, e.g., a fuse. The current block device may be fused or broken to block charge and discharge current, when the charge and discharge current has a value higher than a threshold value, and for the convenience during a replacement work of the current block device, the service terminal 300, such as the current block device, may be in the outer portion O of the housing 100. In an implementation, other than the fuse, the service terminal 300 may include components, e.g., a terminal connected to the first bus bar 150a forming a high current path with respect to the charge and discharge current of the battery cell 210 or a terminal connected to the second bus bar 150b forming a low current path with respect to the state information of the battery cell 210. In an implementation, the service terminal 300 may comprehensively denote various components that are in the outer portion O of the housing in consideration of the convenience of maintenance with respect to replacement, repairing, examination, or the like.

The bus bar 150 may form the electrical connection between the battery unit in the inner portion of the housing 100 and the service terminal 300 in the outer portion O of the housing 100. In an implementation, the first end 151 of the bus bar 150 may form the electrical connection with the battery unit 200 in the inner portion of the housing 100, and the second end 152 of the bus bar 150 may form the electrical connection with the service terminal 300 in the outer portion O of the housing 100. In an implementation, the bus bar 150 may connect between the battery unit 200 and the service terminal 300 through the main body 153 connecting the first end 151 (connected to the battery unit 200) with the second end 152 (connected to the service terminal 300). In an implementation, the battery unit 200 may be in the inner portion of the accommodation space G, and the service terminal 300 may be in the outer portion of the accommodation space G for convenience of maintenance with respect to replacement, repairing checks, or the like. In an implementation, the bus bar 150 may have at least a portion that is buried in the housing, for connection between the first end 151 in the inner portion of the housing 100 and the second end 152 in the outer portion O of the housing 100. Throughout this specification, that at least a portion of the bus bar 150 may be buried in the housing 100 may denote that the at least the portion of the bus bar 150 may be buried in the housing 100 so as not to be exposed through or outside the housing 100 so that the first end 151 of the bus bar 150 may be exposed at the inner portion of the housing 100 and the second end 152 of the bus bar 150 may be exposed at the outer portion O of the housing 100. In an implementation, it may denote that the at least the portion of the bus bar 150 may be buried in the housing 100, e.g., to penetrate the housing 100. In an implementation, it may denote that the at least the portion of the bus bar 150 may be buried in the housing 100 in which the inner portion and the outer portion are defined, so that the first end 151 in the inner portion of the housing 100 may be connected with the second end 152 in the outer portion O of the housing 100.

In an implementation, the bus bar 150 may include the first end 151 on the upper surface of the first step-difference block 110 and the second end 152 on the lower surface of the second step-difference block 120. In an implementation, the bus bar 150 may extend across the first step-difference block 110 and the second step-difference block 120 connecting between the first and second ends 151 and 152. In an implementation, the bus bar 150 may include the first end 151 on the upper surface of the first step-difference block 110, and the main body 153 extending (e.g., lengthwise) from the first end 151 in the height direction Z3 by being buried in the first step-difference block 110. In an implementation, the bus bar 150 may include the second end 152 extending on the lower surface of the second step-difference blocks 120. In an implementation, the main body 153 of the bus bar 150 may extend together with the first step-difference block 110 in the height direction Z3 by being buried in the first step-difference block 110, and the first and second ends 151 and 152 of the bus bar 150 may be bent, from the main body 153 of the bus bar 150 (extending in the height direction Z3), in different directions (e.g., away) from each other. In an implementation, the first and second ends 151 and 152 of the bus bar 150 may be bent toward a front side and a rear side, respectively, which are opposite to each other, with respect to the long side direction Z1 of the housing 100, and may be on the upper surface of the first step-difference block 110 and the lower surface of the second step-difference block 120, respectively. In an implementation, when at least a portion of the bus bar 150 is buried in the housing 100, the portion of the bus bar 150 buried in the housing 100 may be the main body 153 of the bus bar 150 connecting between the first and second ends 151 and 152, e.g., other than the first end 151 exposed at the upper surface of the first step-difference block 110 and the second end 152 exposed at the lower surface of the second step-difference block 120. In an implementation, the main body 153 of the bus bar 150 may be buried in the first step-difference block 110 and may extend in the height direction Z3 together with the first step-difference block 110 and may connect the first end 151 on the first step-difference block 110 with the second end 152 on the second step-difference block 120. Throughout this specification, that at least a portion of the bus bar 150 may be buried in the housing 100 may denote that at least the portion of the bus bar 150 buried in the housing 100 is not exposed though the housing 100. In an implementation, the first and second ends 151 and 152 of the bus bar 150 may be exposed at the first and second step-difference blocks 110 and 120, respectively, and the first and second ends 151 and 152 may understood as not being buried in the housing 100. In an implementation, at least an upper surface of the first end 151 of the bus bar 150 may be exposed at the upper surface of the first step-difference block 110, and thus, the first end 151 may be not buried in the housing 100 (including the first step-difference block 110). In an implementation, at least a lower surface of the second end 152 of the bus bar 150 may be exposed at the lower surface of the second step-difference block 120, and thus, the second end 152 may be not buried in the housing 100 including the second step-difference block 120.

In an implementation, the first step-difference block 110 may include a first block 110a supporting the first end 151 of the bus bar 150 and a second block 110b burying or covering the main body 153 of the bus bar 150 and extending in the height direction Z3, and may have a bent shape to support the first end 151 and the main body 153 of the bus bar 150. In an implementation, the first and second blocks 110a and 110b of the first step-difference block 110 may have a square-pillar shape by extending in or to the same height.

The first and second ends 151 and 152 of the bus bar 150 may be supported by the upper surface of the first step-difference block 110 and the lower surface of the second step-difference block 120, respectively. In an implementation, a first clamping portion 115 may be extend inwardly from the upper surface of the first step-difference block 110 (at which the first end 151 of the bus bar 150 is supported), to a predetermined coupling depth, e.g., at or in an upper portion of the first step-difference block 110. In an implementation, a second clamping portion 125 may extend inwardly from the lower surface of the second step-difference block 120 (at which the second end 152 of the bus bar 150 is supported), to a predetermined coupling depth, e.g., at or in a lower portion of the second step-difference block 120. The first and second clamping portions 115 and 125 may help fix the locations or positions of the first and second ends 151 and 152, respectively, above the first step-difference block 110 and below the second step-difference block 120, respectively, wherein the first and second step-difference blocks 110 and 120 support the first and second ends 151 and 152 of the bus bar 150, respectively.

In an implementation, the first and second clamping portions 115 and 125 may be adjacent to each other. In an implementation, the first and second clamping portions 115 and 125 may be not (e.g., vertically in the Z3 direction) overlapping with each other. In an implementation, coupling lengths of the first and second clamping portions 115 and 125 may be sufficiently great or deep without interference from each other, and through the sufficiently great coupling lengths of the first and second clamping portions 115 and 125, the location fixation power or ability of the first and second ends 151 and 152 exercised by the first and second clamping portions 115 and 125 may be increased. If the first and second clamping portions 115 and 125 were to vertically overlap each other, coupling lengths of the first and second clamping portions 115 and 125 could operate as a limiting factor with respect to each other. For example, the coupling lengths of the first and second clamping portions 115 and 125 at the same (e.g., overlapping) location could operate as a limiting factor with respect to each other, and accordingly, the coupling lengths of the first and second clamping portions 115 and 125 may be insufficient. For example, the coupling length of the first clamping portion 115 could be limited by the coupling length of the second clamping portion 125, and conversely, the coupling length of the second clamping portion 125 could be limited by the coupling length of the first clamping portion 115.

In an implementation, the bus bar 150 may include the first and second ends 151 and 152, and the first and second step-difference blocks 110 and 120 fixing the locations of the first and second ends 151 and 152 may be not vertically overlapped each other. Thus, the first and second clamping portions 115 and 125 at the upper portion of the first step-difference block 110 and the lower portion of the second step-difference block 120, respectively, may also not to overlap each other. In an implementation, the first and second clamping portions 115 and 125 may be not overlapped each other, and the first and second clamping portions 115 and 125 may have the sufficient coupling lengths, e.g., without interference from each other.

In an implementation, that the first and second clamping portions 115 and 125 may be, e.g., adjacent to each other, and may be not vertically overlapping with each other, e.g., first and second coupling locations fixing the locations of the first and second ends 151 and 152 of the bus bar 150, respectively, may be misaligned with each other not to overlap each other (e.g., in the Z3 direction). In an implementation, the locations of the first and second ends 151 and 152 of the bus bar 150 may be fixed at the first and second coupling locations that are adjacent to each other but offset or misaligned with each other, and the locations of the first and second ends 151 and 152 of the bus bar 150 may be solidly fixed without interference with respect to each other. If the first and second coupling locations were to vertically overlap each other, e.g., if the first and second coupling locations were to correspond to the upper portion and the lower portion of the first step-difference block 110, shaking or fluctuation of the first step-difference block 110 could affect the location fixation of both of the first and second ends 151 and 152, and through the first step-difference block 110, the location fixation state of the first end 151 and the location fixation state of the second end 152 could affect each other.

In an implementation, the first end 151 of the bus bar 150 may be on the upper surface of the first step-difference block 110, with respect to the location of the first clamping portion 115. The first clamping portion 115 may extend inwardly from the upper surface of the first step-difference block 110 to a predetermined coupling depth. In an implementation, the first clamping portion 115 may include a screw thread which may be coordinated or coupled with a screw, e.g., to couple with a screw joint, used as the clamping member 50. In an implementation, the coupling depth of the first clamping portion 115 or at least a portion of the coupling depth may define a coupling length between the first clamping portion 115 and the clamping member 50. In an implementation, the clamping member 50 may be clamped or coupled with the first clamping portion 115 of the first step-difference block 110 by penetrating through a clamping hole of the first end 151 of the bus bar 150 on the upper surface of the first step-difference block 110, and thus, the location of the first end 151 of the bus bar 150 may be fixed on the upper surface of the first step-difference block 110.

In an implementation, the second end 152 of the bus bar 150 may be on the lower surface of the second step-difference block 120, with respect to the location of the second clamping portion 125. The second clamping portion 125 may extend inwardly from the lower surface of the second step-difference block 120 to a predetermined coupling depth. In an implementation, the second clamping portion 125 may include a screw thread which may be coordinated or coupled with a screw, e.g., to couple with a screw joint, used as the clamping member 50. In an implementation, the coupling depth of the second clamping portion 125 or at least a portion of the coupling depth may define a coupling length between the second clamping portion 125 and the clamping member 50. In an implementation, the clamping member 50 may be clamped with the second clamping portion 125 of the second step-difference block 120 by penetrating through a clamping hole of the second end 152 of the bus bar 150 on the lower surface of the second step-difference block 120, and thus, the location of the second end 152 of the bus bar 150 may be fixed on the lower surface of the second step-difference block 120. Throughout this specification, both the height and the depth may denote the dimension in the height direction Z3. In an implementation, the coupling depths of the first and second clamping portions 115 and 125 may denote the lengths by which the first and second clamping portions 115 and 125 extend inwardly from the upper surface of the first step-difference block 110 and the lower surface of the second step-difference block 120, respectively, in the height direction Z3.

In an implementation, the bus bar 150 may connect the battery unit 200 in the inner portion of the housing 100 and the service terminal 300 in the outer portion O of the housing 100. In an implementation, the bus bar 150 may include the first end 151 exposed at the inner portion of the housing 100 and the second end 152 exposed at the outer portion O of the housing 100. In an implementation, the first end 151 of the bus bar 150 may be exposed at the inner portion of the housing 100 and may be electrically connected with the battery unit 200 in the inner portion of the housing 100, and the second end 152 of the bus bar 150 may be exposed at the outer portion O of the housing 100 and may be electrically connected with the service terminal 300 in the outer portion O of the housing 100. Throughout this specification, that the first end 151 of the bus bar 150 may be exposed to the inner portion of the housing 100 may denote that an upper surface of the first end 151 that faces the inner portion of the housing 100 and is opposite to (e.g., faces away from) the first step-difference block 110 may be exposed at the inner portion of the housing 100, and a lower surface of the first end 151 may be buried in or face the first step-difference block 110. In an implementation, the upper surface of the first end 151 may be exposed at the inner portion of the housing 100, and the lower surface of the first end 151 may be buried in (e.g., may face or contact) the first step-difference block 110 and may be not exposed at the inner portion of the housing 100. Here, that the lower surface of the first end 151 may be buried in the first step-difference block 110 may, e.g., denote that the lower surface of the first end 151 may have the fixed location through physical interference with respect to the first step-difference block 110 (e.g., the upper surface of the first step-difference block 110).

Similarly, that the second end 152 of the bus bar 150 may be exposed at the outer portion O of the housing 100 may denote that a lower surface of the second end 152 that faces the outer portion O of the housing 100 and is opposite to (e.g., faces away from) the second step-difference block 120 may be exposed at the outer portion O of the housing 100, and an upper surface of the second end 152 may be buried in (e.g., may face or contact) the second step-difference block 120. In an implementation, the lower surface of the second end 152 may be exposed at the outer portion O of the housing 100, and the upper surface of the second end 152 may be buried in the second step-difference block 120 and may be not exposed at the outer portion O of the housing 100. Here, that the upper surface of the second end 152 may be buried in the second step-difference block 120 may, e.g., denote that the upper surface of the second end 152 may have the fixed location through physical interference with respect to the second step-difference block 120 (e.g., the lower surface of the second step-difference block 120).

In an implementation, the first and second ends 151 and 152 of the bus bar 150 may be exposed at the inner portion and the outer portion O of the housing 100, respectively, and at least a portion of the main body 153 of the bus bar 150 (e.g., the main body 153 connecting the first and second ends 151 and 152 with each other between the first and second ends 151 and 152) may be buried in (e.g., covered or surrounded by) the housing 100. In an implementation, at least a portion of the main body 153 of the bus bar 150 may be buried in the housing 100 to thus expose the first and second ends 151 and 152 at both ends thereof at the inner portion and the outer portion of the accommodation space G, respectively. In an implementation, the main body 153 of the bus bar 150 may be generally buried in the housing 100. In an implementation, the main body 153 of the bus bar 150 may buried in the first step-difference block 110 of the first and second step-difference blocks 110 and 120 supporting the first end 151 and the second end 152, respectively, and may extend in the height direction Z3 together with the first step-difference block 110 (e.g., corresponding to the second block 110b of the first step-difference block 110). In an implementation, the first and second ends 151 and 152 that are respectively bent from one end and the other end of the main body 153 of the bus bar 150 extending in the height direction Z3 toward a front location and a rear location, respectively, may be on the upper surface of the first step-difference block 110 and on the lower surface of the second step-difference block 120, respectively. In an implementation, the first end 151 and the main body 153 of the bus bar 150 may be supported by the first step-difference block 110 by forming interference with the first step-difference block 110, and the second end 152 may be supported by the second step-difference block 120 by forming interference with the second step-difference block 120 (e.g., adjacent to the first step-difference block 110). The first and second step-difference blocks 110 and 120 may extend from the front wall F to be adjacent to each other in the long side direction Z1 (e.g., when viewed in a plan view). With respect to the locational relationship of the first end 151 and the main body 153 of the bus bar 150 supported by the first step-difference block 110, the first end 151 of the bus bar 150 may be at a location relatively close or proximate to the front wall F in the long side direction Z1, and the main body 153 of the bus bar 150 may be arranged at a location relatively close or proximate to the second step-difference block 120 in the long side direction Z1. In an implementation, the first end 151 of the bus bar 150 may be supported by the first block 110a of the first step-difference block 110 that is relatively close to the front wall F in the long side direction Z1, and the main body 153 of the bus bar 150 may be supported by the second block 110b of the first step-difference block 110 that is relatively close to the second step-difference block 120 in the long side direction Z1.

In an implementation, the first end 151 and the main body 153 of the bus bar 150 may be connected to each other as a bent shape. In an implementation, a central location of the first end 151 of the bus bar 150 may be relatively close to the front wall F in the long side direction Z1, and the main body 153 of the bus bar 150 may be relatively close to the second step-difference block 120 in the long side direction Z1. In an implementation, the first step-difference block 110 supporting the first end 151 and the main body 153 of the bus bar 150 may include the first and second blocks 110a and 110b connected to each other as a bent shape and supporting the first end 151 and the main body 153 of the bus bar 150. In an implementation, the first end 151 of the bus bar 150 may be supported by the first block 110a of the first step-difference block 110, and the main body 153 of the bus bar 150 may be supported by the second block 110b of the first step-difference block 110.

Hereinafter, a sealing structure provided by first and second sealing portions 10 and 20 (e.g., gaskets), according to an embodiment, is described.

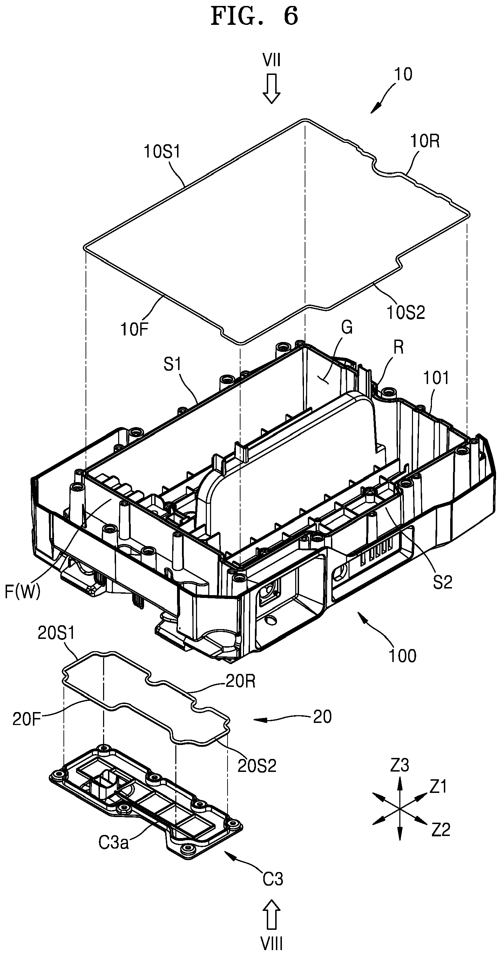

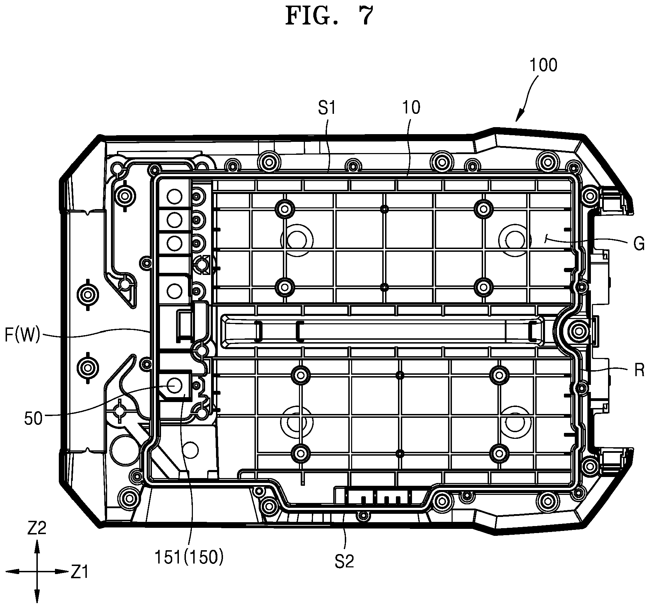

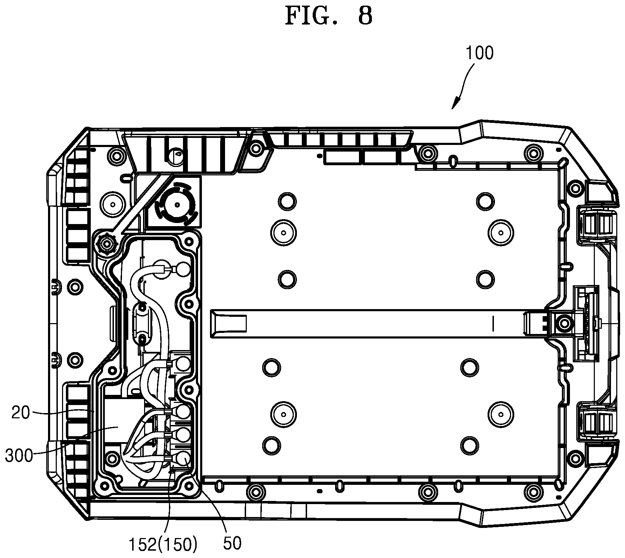

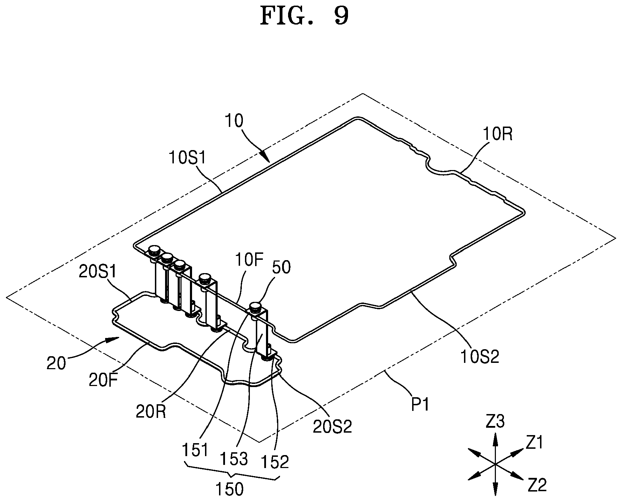

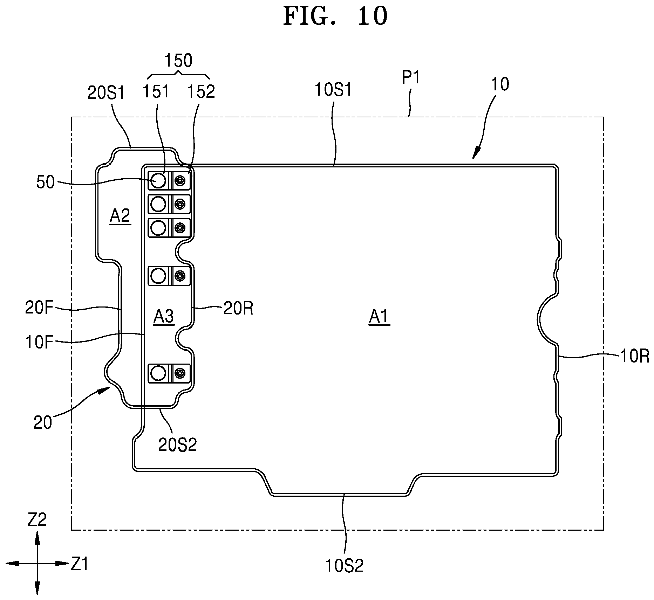

FIG. 6 is an exploded perspective view of a battery pack according to an embodiment and illustrates an arrangement of the first and second sealing portions 10 and 20. FIGS. 7 and 8 are views of the arrangement of the first sealing portion 10 and the second sealing portion 20 of FIG. 6, from the perspective of a direction VII and a direction VIII, respectively. FIG. 9 is a perspective view of an arrangement of the bus bar 150 and the first and second sealing portions 10 and 20. FIG. 10 is a view of the first and second sealing portions 10 and 20 illustrated in FIG. 9, the first and second sealing portions 10 and 20 being projected on a virtual first plane.

Referring to FIGS. 6 through 10, the first and second sealing portions 10 and 20 may facilitate sealing with respect to the inner portion and the outer portion O of the housing 100, respectively (e.g., may help separate the inner portion and the outer portion O of the housing). In an implementation, the first sealing portion 10 may facilitate sealing with respect to the inner portion of the accommodation space G, corresponding to the inner portion of the housing 100. In an implementation, the first sealing portion 10 may be between the housing 100 and the cover C1, assembled to face each other with the accommodation space G therebetween, and may facilitate sealing with respect to the accommodation space G between the housing 100 and the cover C1. In an implementation, a first assembling groove 101 (into which the first sealing portion 10 may be inserted and coupled) may be along the walls W of the housing 100. In an implementation, the first assembling groove 101 may be continuously formed along the walls W of the housing 100 and may continuously surround the accommodation space G and may, e.g., water-proof, seal the battery unit 200 and the first end 151 of the bus bar 150 in the accommodation space G. In an implementation, the first sealing portion 10 may facilitate sealing with respect to the electrical connection between the battery unit 200 and the first end 151, together with respect to the battery unit 200 and the first end 151 of the bus bar 150. The first end 151 of the bus bar 150 may form an electrical connection with the battery unit 200 in the inner portion of the housing 100, and the electrical connection between the first end 151 of the bus bar 150 and the battery unit 200 may be protected by the first sealing portion 10 continuously surrounding the inner portion of the housing 100. In an implementation, the first sealing portion 10 may be inserted into the first assembling groove 101 continuously extending around the front wall F, the rearwall F, and the first and second side walls S1 and S2 defining the accommodation space G. In an implementation, the first sealing portion 10 may be inserted into the first assembling groove 101 and may seal the inner portion of the accommodation space G or the inner portion of the housing 100. In an implementation, the first sealing portion 10 may include a front strand 10F on the front wall F, a rear strand 10R on the rear wall R, and a pair of side strands 10S1 and 10S2 on the first and second side walls S1 and S2.

In an implementation, the first sealing portion 10 may facilitate sealing with respect to the first end 151 of the bus bar 150, e.g., the first sealing portion 10 may facilitate sealing with respect to the inner portion of the housing 100, in which the first end 151 of the bus bar 150 is accommodated, so that the first end 151 of the bus bar 150 or the electrical connection between the first end 151 of the bus bar 150 and the battery unit 200 may be not exposed to external hazardous environments, e.g., external foreign materials, oxygen, water, or the like.

In an implementation, the first sealing portion 10 may include an elastic member and may be formed, e.g., as an O-ring or the like, according to a sectional shape thereof. In an implementation, the first sealing portion 10 may be not of regular shape, e.g., the O-ring, and may be formed, e.g., in the form of a liquid or a gel, to also provide adhesion between the housing 100 and the cover C1 or to seal between the housing 100 and the cover C1 through an appropriate hardening process, such as natural hardening, high- temperature hardening, light hardening, or the like.

In an implementation, the second sealing portion 20 may facilitate sealing with respect to the service terminal 300 corresponding to the outer portion O of the housing 100. In an implementation, the second sealing portion 20 may be between the outer portion O of the housing 100 and the cover C3 of the service terminal 300 coupled with each other to face each other and may facilitate sealing between the outer portion O of the housing 100 and the cover C3 of the service terminal 300. In an implementation, a second assembling groove 102 (see FIG. 5) for coupling the cover C3 of the service terminal 300 may be at the bottom of the housing 100, and an assembling rib C3a of the cover C3 of the service terminal 300 may be inserted into and coupled with the second assembling groove 102 with the second sealing portion 20 therebetween. In an implementation, the second sealing portion 20 may continuously extend along the second assembling groove 102 or the assembling rib C3a inserted into the second assembling groove 102 and may continuously surround a service terminal space in which the service terminal 300 is arranged. In an implementation, the second sealing portion 20 may provide, e.g., water-proof, sealing with respect to the service terminal 300 and the second end 152 of the bus bar 150. In an implementation, the second sealing portion 20 may facilitate sealing with respect to an electrical connection between the service terminal 300 and the second end 152, together with respect to the service terminal 300 and the second end 152 of the bus bar 150. The second end 152 of the bus bar 150 may form the electrical connection with the service terminal 300 in the outer portion O of the housing 100, and the electrical connection between the second end 152 of the bus bar 150 and the service terminal 300 may be protected by the second sealing portion 20 continuously surrounding the service terminal space in the outer portion O of the housing 100. In an implementation, the second sealing portion 20 may include a front strand 20F at the front side, a rear strand 20R at the rear side, and a pair of side strands 20S1 and 20S2 connecting the front strand 20F with the rear strand 20R.

In an implementation, the second sealing portion 20 may facilitate sealing with respect to the second end 152 of the bus bar 150, e.g., second sealing portion 20 may facilitate sealing with respect to the outer portion O of the housing 100, in which the second end 152 of the bus bar 150 is provided, so that the second end 152 of the bus bar 150 or the electrical connection between the second end 152 of the bus bar 150 and the battery unit 200 may be not exposed to external hazardous environments, such as external foreign materials, oxygen, water, or the like.

In an implementation, the second sealing portion 20 may include an elastic member and may be formed, e.g., as an O-ring or the like, according to a sectional shape thereof. In an implementation, the second sealing portion 20 may be not formed to have a regular shape, e.g. the O-ring, and may be formed, e.g., in the form of a liquid or a gel, to provide adhesion between the second assembling groove 102 (see FIG. 5) at the bottom of the housing 100 and the assembling rib C3a of the cover 3 of the service terminal 300 or to seal between the second assembling groove 102 of the housing 100 and the assembling rib C3a of the cover C3 of the service terminal 300 through an appropriate hardening process, such as natural hardening, high- temperature hardening, light hardening, or the like.

The first sealing portion 10 may surround the battery unit 200 and may form a relatively wide first projection area A1. In an implementation, the first projection area A1 of the first sealing portion 10 may denote an area surrounded by the projection of the first sealing portion 10, when the first sealing portion 10 is projected on a virtual first plane P1 in the height direction Z3. In an implementation, the first projection area A1 of the first sealing portion 10 surrounding the battery unit 200 may be relatively large and, as described below, may be larger than a second projection area A2 of the second sealing portion 20 surrounding the service terminal 300.

The second sealing portion 20 may form the second projection area A2 (that is relatively small, when compared with the first projection area A1) by surrounding the service terminal 300. In an implementation, the second projection area A2 of the second sealing portion 20 may denote an area surrounded by a projection of the second sealing portion 20, when the second sealing portion 20 is projected on the virtual first plane P1 in the height direction Z3. In an implementation, the second projection area A2 of the second sealing portion 20 surrounding the service terminal 300 may be relatively small, e.g., may be smaller than the first projection area A1 of the first sealing portion 10 surrounding the battery unit 200.

The second sealing portion 20 may surround the service terminal 300 at a relatively front location, and may be biased toward the front side more than the first sealing portion 10 surrounding the battery unit 200 at an approximate central location. In an implementation, with respect to a relative arrangement of the first and second projection areas A1 and A2 of the first and second sealing portions 10 and 20, the second projection area A2 of the second sealing portion 20 may be at a relatively front location, and the first projection area A1 of the first sealing portion 10 may be arranged at a relatively rear location. In an implementation, according to the relative comparison of the first and second projection areas A1 and A2 of the first and second sealing portions 10 and 20, the second projection area A2 of the second sealing portion 20 may be relatively smaller at the relatively front location, and the first projection area A1 of the first sealing portion 10 may be relatively large at the relatively rear location.

In an implementation, the first end 151 of the bus bar 150 may be at a relatively front location, and the second end 152 of the bus bar 150 may be at a relatively rear location, and thus, the front strand 10F of the first sealing portion 10 closely surrounding the first end 151 of the bus bar 150 may be at a relatively more front location than the rear strand 20R of the second sealing portion 20 closely surrounding the second end 152 of the bus bar 150. In an implementation, the front strand 10F of the first sealing portion 10 surrounding the battery unit 200 and at the relatively rear location may be arranged at the relatively more front location than the rear strand 20R of the second sealing portion 20 surrounding the service terminal 300 and arranged at the relatively front location, and each of the first projection area A1 of the first sealing portion 10 and the second projection area A2 of the second sealing portion 20 may include a first overlap area A3 overlapping each other. In an implementation, the first projection area A1 of the first sealing portion 10 may include the first overlap area A3, e.g., overlapping the second projection area A2 of the second sealing portion 20, and a second area at a relatively rear location so as not to overlap the second projection area A2 of the second sealing portion 20. In an implementation, the second projection area A2 of the second sealing portion 20 may also include the first overlap area A3, e.g., overlapping the first projection area A1 of the first sealing portion 10, and a second area at a relatively front location so as not to overlap the first projection area A1 of the first sealing portion 10.

In an implementation, the first end 151 of the bus bar 150 forming an electrical connection with the battery unit 200 may be at a relatively front location in the long side direction Z1, and the second end 152 of the bus bar 150 forming an electrical connection with the service terminal 300 may be at a relatively rear location. Thus, each of the first projection area A1 of the first sealing portion 10 sealing the first end 151 of the bus bar 150 and the second projection area A2 of the second sealing portion 20 sealing the second end 152 of the bus bar 150 may include the first overlap area A3 overlapping each other. In an implementation, the first end 151 of the bus bar 150 may be at the relatively front location, and the second end 152 of the bus bar 150 may be at the relatively rear location, and thus, the main body 153 of the bus bar 150 connecting the first and second ends 151 and 152 of the bus bar 150 with each other may be at a relatively little depth t (see FIG. 5) from a surface of the first step-difference block 110, the surface being exposed to the accommodation space G. Thus, the location fixation of the bus bar 150 integrally formed with the housing 100 through insert molding may be relatively easily achieved, and a location defect of the bus bar 150 due to fluctuation of the bus bar 150 during the insert molding may be reduced. If the first end 151 of the bus bar 150 were to be arranged at a relatively rear location, and the second end 152 of the bus bar 150 were to be arranged at a relatively front location, the main body 153 of the bus bar 150 connecting between the first end 151 and the second end 152 of the bus bar 150 could be arranged at a significant depth from a surface of the first step-difference block 110, the surface being exposed to the accommodation space G, and thus, a location defect of the bus bar 150 could occur due to fluctuation of the bus bar 150 when the housing 100 is formed through insert molding, while at least a portion of the bus bar 150 is buried in the housing 100.

The first and second sealing portions 10 and 20 may be at different heights from each other in the height direction Z3. In an implementation, the first sealing portion 10 may have a height corresponding to a height of the walls W of the housing 100 surrounding the accommodation space G. The second sealing portion 20 may be in the outer portion O of the housing 100, which is opposite to the accommodation space G, it may be understood that the first sealing portion 10 may be arranged at a relatively high level, and the second sealing portion 20 may be arranged at a relatively low level.

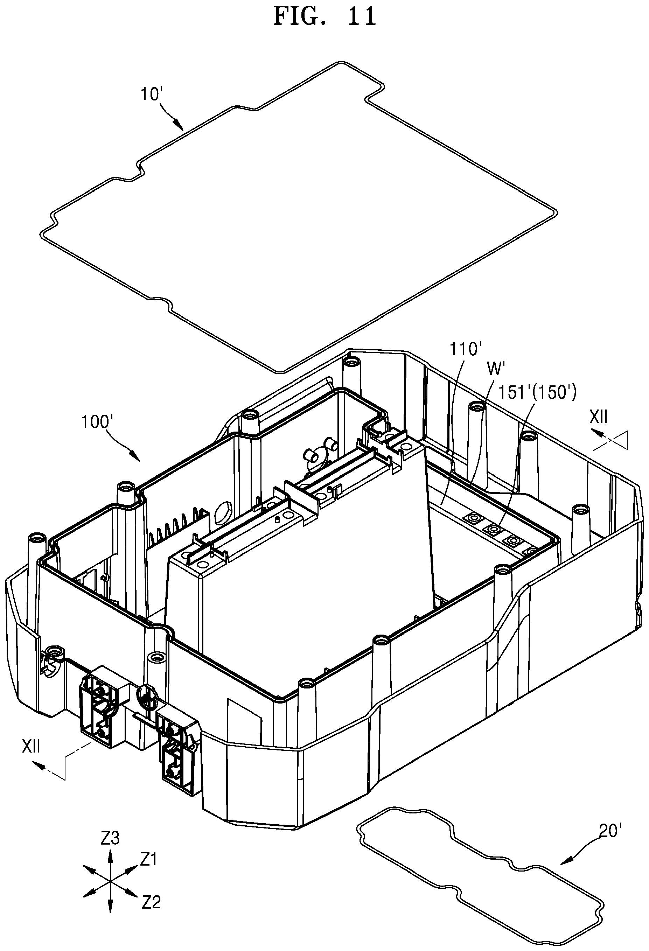

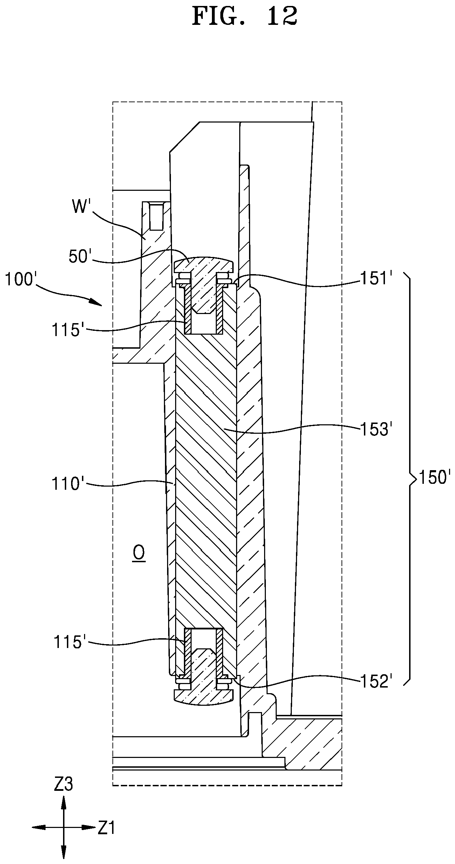

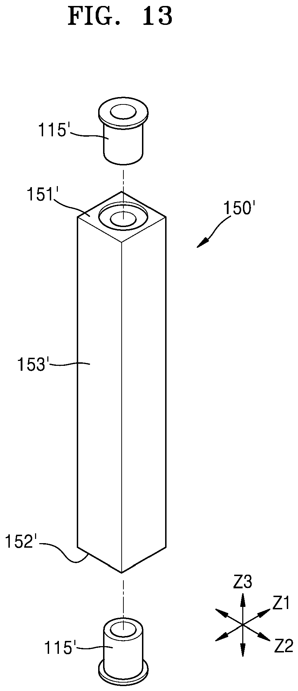

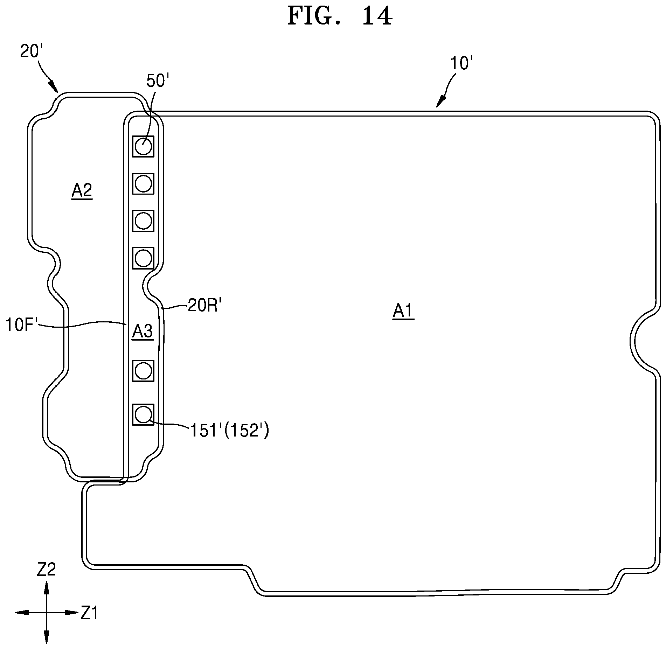

FIG. 11 is a perspective view of a housing 100' applicable to a battery pack, according to another embodiment. FIG. 12 is a cross-sectional view of the housing 100' of FIG. 11, taken along a line XII-XII. FIG 13 is a perspective view of a bus bar illustrated in FIG. 12. FIG. 14 is a view of first and second sealing portions 10' and 20' illustrated in FIG. 11, the first and second sealing portions 10' and 20' being projected on a virtual first plane.

The housing 100' may accommodate a battery unit in an inner portion thereof, and a service terminal electrically connected to the battery unit may be in an outer portion of the housing 100'. In an implementation, a first end 151' of a bus bar 150' electrically connected to the battery unit and a second end 152' of the bus bar 150' electrically connected to the service terminal may be in the inner portion and the outer portion O of the housing 100', respectively, and at least a portion of the bus bar 150' may be buried in the housing 100'.

In an implementation, the first and second ends 151' and 152' of the bus bar 150' may be in the inner portion and the outer portion O of the housing 100', respectively, and according to the present embodiment, the first and second ends 151' and 152' of the bus bar 150' may be supported on a step-difference block 110' forming an upper surface and a lower surface having a step difference with respect to each other. In an implementation, the step-difference block 110' may include the upper surface having a step difference from walls W' of the housing 100' in a height direction Z3 and the lower surface having a step difference from the bottom of the housing 100' in the height direction Z3. In an implementation, the upper surface of the step-difference block 110' need not form the step difference from the walls W of the housing 100' in the height direction Z3, and the upper surface may be at the same height as the walls W of the housing 100'. In an implementation, the lower surface of the step-difference block 110' need not form the step difference from the bottom of the housing 100' in the height direction Z3, and the lower surface may be at the same height as the bottom of the housing 100'. In an implementation, the step-difference block 110' may form the upper surface and the lower surface at the same height as the walls W' of the housing 100' and/or the bottom of the housing 100'.

In an implementation, the first and second ends 151' and 152' of the bus bar 150' may be supported on the upper surface and the lower surface of the step-difference block 110', respectively, that are at corresponding locations with step difference relative to each other. In an implementation, as described above, according to the embodiment illustrated in FIG. 5, the first and second ends 151 and 152 of the bus bar 150 may be supported by the first and second step-difference blocks 110 and 120, respectively, that are adjacent to each other and form an upper surface having a step difference. In an implementation, as illustrated in FIG. 12, the first and second ends 151' and 152' of the bus bar 150' may be supported by the upper surface and the lower surface of the step-difference block 110', respectively, that are at the same horizontal location (e.g., vertically overlapping arrangement) and have the step difference with respect to each other. Throughout this specification, that the first and second step-difference blocks 110 and 120 may be formed to be adjacent to each other, according to the embodiment illustrated in FIG. 5, or that the step-difference block 110' may have the upper and lower surfaces thereof arranged at the same horizontal location and having the step difference, according to the embodiment illustrated in FIG. 12, may denote that the first and second step-difference blocks 110 and 120 may be adjacent to each other on a virtual plane formed by a long side direction Z1 and a short side direction Z2 or that the step-difference block 110' may have a columnar shape extending in the height direction Z3 to have the upper and lower surfaces thereof having the step-difference with respect to each other, on a virtual plane formed by the long side direction Z1 and the short side direction Z2. In an implementation, as illustrated in FIG. 12, the upper surface and the lower surface of the step-difference block 110' may form the step difference with respect to each other in the height direction Z3.

In an implementation, as illustrated in FIG. 5, the first and second ends 151 and 152 of the bus bar 150 may be respectively arranged at the front location and the rear location that are opposite to each other in the long side direction Z1, and thus, the first and second ends 151 and 152 of the bus bar 150 may be supported on the first and second step-difference blocks 110 and 120, respectively, that are at the front location and the rear location, respectively, that are adjacent to each other in the long side direction Z1. In an implementation, unlike the embodiment illustrated in FIG. 5, according to the embodiment illustrated in FIG. 12, the first and second ends 151' and 152' of the bus bar 150' may be arranged at the same location in the long side direction Z1 and may be supported on the upper surface and the lower surface of the step-difference block 110' formed at the same location in the long side direction Z1.

In an implementation, the first end 151' of the bus bar 150' may be on or at the upper surface of the step-difference block 110', may include an upper surface exposed at the inner portion of the housing 100', in which the battery unit is arranged, and may form an electrical connection with the battery unit. In an implementation, the second end 152' of the bus bar 150' may be on or at the lower surface of the step-difference block 110', may include a lower surface exposed to the outer portion O of the housing 100', in which the service terminal is arranged, and may form an electrical connection with the service terminal. In an implementation, the first and second ends 151' and 152' of the bus bar 150' may be exposed at the inner portion and the outer portion O of the housing 100', respectively, and at least a portion of the bus bar 150' may be buried in the housing 100'.

In an implementation, the bus bar 150' may include the first and second ends 151' and 152' at both (e.g., opposite) ends thereof and a main body 153' between the first and second ends 151' and 152', and the first and second ends 151' and 152' of the bus bar 150' may be at the same location in the long side direction Z1 (e.g., may vertically overlap in the Z3 direction). In an implementation, the first and second ends 151' and 152' of the bus bar 150' may extend from the main body 153' in the height direction Z3 to have a columnar shape. In an implementation, the bus bar 150' may extend (e.g., lengthwise) in the height direction to have a columnar shape. In an implementation, at least a portion of the bus bar 150' may be buried in the step-difference block 110'. In an implementation, the main body 153' of the bus bar 150' may be buried in the step-difference block 110'. In an implementation, the bus bar 150' may include the main body 153' buried in the step-difference block 110', and the first and second ends 151' and 152' extending from the main body 153' to have the columnar shape in a longitudinal direction of the main body 153' and exposed through the upper surface and the lower surface of the step-difference block 110', respectively. The step-difference block 110' may extend in a parallel direction with the main body 153' of the bus bar 150' to bury the main body 153' of the bus bar 150' and may extend in the height direction Z3 to have a columnar shape, while supporting the bus bar 150' extending in the height direction Z3. In an implementation, the step-difference block 110' supporting the first and second ends 151' and 152' of the bus bar 150' and burying the main body 153' of the bus bar 150' may extend to have the columnar shape in the height direction Z3, in which the step-difference block 110' and the bus bar 150' are parallel to each other. Throughout the specification, that the step-difference block 110' may extend to have the columnar shape in the height direction Z3 may denote that a cross-sectional shape of the step-difference block 110' extending in parallel with the bus bar 150' may extend to have a columnar shape in the height direction Z3, and the step-difference block 110' may extend in the short side direction Z2 so as to bury all of the plurality of bus bars 150' in the short side direction Z2. In an implementation, the step-difference block 110' may have a block shape extending in the short side direction Z2 and the height direction Z3.

In an implementation, a clamping portion 115', into which a clamping member 50' for forming an electrical connection with the bus bar 150' is inserted, may be in the first and second ends 151' and 152' of the bus bar 150'. In an implementation, the clamping portion 115' may extend inwardly from the first and second ends 151' and 152' of the bus bar 150' toward the main body 153' of the bus bar 150'. In an implementation, the clamping portion 115' may have a cylindrical shape extending inwardly from the first and second ends 151' and 152' of the bus bar 150' toward the main body 153' of the bus bar 150' by a predetermined depth and may extend toward the main body 153' of the bus bar 150' from the first and second ends 151' and 152' of the bus bar 150'. In an implementation, the clamping portion 115', which is the cylindrically shaped member, may include, e.g., a screw thread on an inner circumferential surface thereof for a screw joint with the clamping member 50', and may form a contact with the bus bar 150' through an outer circumferential surface thereof.

In an implementation, the first sealing portion 10' surrounding the battery unit and the first end 151' of the bus bar 150' and facilitated sealing with respect to an electrical connection between the battery unit and the first end 151' may be on the housing 100'. In an implementation, the second sealing portion 20' surrounding the service terminal and the second end 152' of the bus bar 150' and facilitating sealing with respect to an electrical connection between the service terminal and the second end 152' may be on the housing 100'.

With respect to a relative arrangement of the first and second projection areas A1 and A2 of the first and second sealing portions 10' and 20', the second projection area A2 of the second sealing portion 20' may be at a relatively front location, and the first projection area A1 of the first sealing portion 10' may be at a relatively rear location. In an implementation, the second projection area A2 of the second sealing portion 20' may be relatively small and may be at the relatively front location, and the first projection area A1 of the first sealing portion 10' may be relatively large and at the relatively rear location. In an implementation, a front strand 10F' of the first sealing portion 10' surrounding the battery unit and at the relatively rear location may be at a relatively more front location than a rear strand 20R' of the second sealing portion 20' surrounding the service terminal and at the relatively front location. Thus, the first projection area A1 of the first sealing portion 10' and the second projection area A2 of the second sealing portion 20' may together form a first overlap area A3 overlapping each other. In an implementation, the first projection area A1 of the first sealing portion 10' may include the first overlap area A3 overlapping the second projection area A2 of the second sealing portion 20', and a second area at a relatively rear location so as not to overlap the second projection area A2 of the second sealing portion 20'. In an implementation, the projection area A2 of the second sealing portion 20' may include the first overlap area A3 overlapping the first projection area A1 of the first sealing portion 10', and a second area at a relatively front location so as not to overlap the first projection area A1 of the first sealing portion 10'.

In an implementation, the first end 151' of the bus bar 150' included in the first projection area A1 of the first sealing portion 10' and the second end 152' of the bus bar 150' included in the second projection area A2 of the second sealing portion 20' may be at the same relative location in the long side direction Z1. In an implementation, the first and second projection areas A1 and A2 of the first and second sealing portions 10' and 20' may include the first and second ends 151' and 152' of the bus bar 150', respectively, therein. In an implementation, the first and second ends 151' and 152' of the bus bar 150' may be sealed in the first and second projection areas A1 and A2 of the first and second sealing portions 10' and 20', respectively. In an implementation, the first projection area A1 of the first sealing portion 10' may extend across a front location of the first end 151' of the bus bar 150' to include the first end 151' of the bus bar 150' at the relatively rear location, and the second projection area A2 of the second sealing portion 20' may extend across a rear location of the second end 152' of the bus bar 150' to include the second end 152' of the bus bar 150' at the relatively front location. Thus, the front strand 10F' of the first sealing portion 10' at the relatively rear location may be at the relatively more front location than the rear strand 20R' of the second sealing portion 20' at the relatively front location. According to this relative arrangement of the first and second sealing portions 10' and 20', each of the first and second projection areas A1 and A2 of the first and second sealing portions 10' and 20' may form or overlie the first overlap area A3 overlapping each other.

In an implementation, as illustrated in FIG. 10, the first end 151 of the bus bar 150 included in the first projection area A1 of the first sealing portion 10 may be at the relatively front location, and the second end 152 of the bus bar 150 included in the second projection area A2 of the second sealing portion 20 may be at the relatively rear location. Thus, each of the first and second projection areas A1 and A2 of the first and second sealing portions 10 and 20 including the first and second ends 151 and 152 of the bus bar 150, respectively, may include or form or overlie the first overlap area A3. In an implementation, as illustrated in FIG. 14, even when the first and second ends 151' and 152' of the bus bar 150' are at the same location in the long side direction Z1 (e.g., the same distance from the wall W in the Z1 direction), each of the first and second projection areas A1 and A2 of the first and second sealing portions 10' and 20' including the first and second ends 151' and 152' of the bus bar 150', respectively, may include the first overlap area A3 overlapping each other. In an implementation, as illustrated in FIG. 10, the first overlap area A3, at which the first and second projection areas A1 and A2 of the first and second sealing portions 10 and 20 overlap each other, may be relatively large. In an implementation, as illustrated in FIG. 14, the first overlap area A3, at which the first and second projection areas A1 and A2 of the first and second sealing portions 10' and 20' overlap each other, may be relatively small.

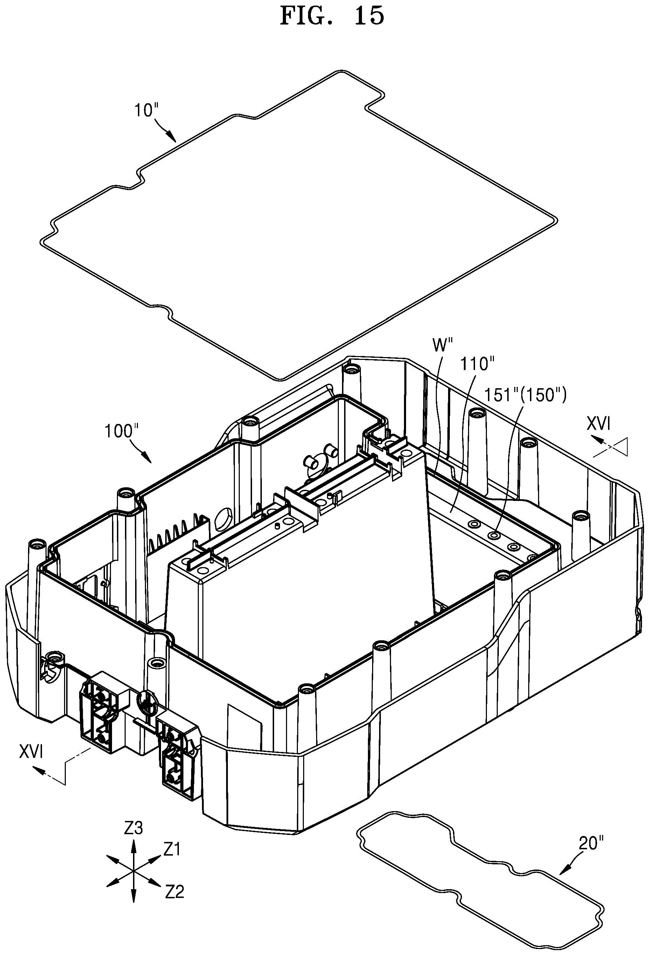

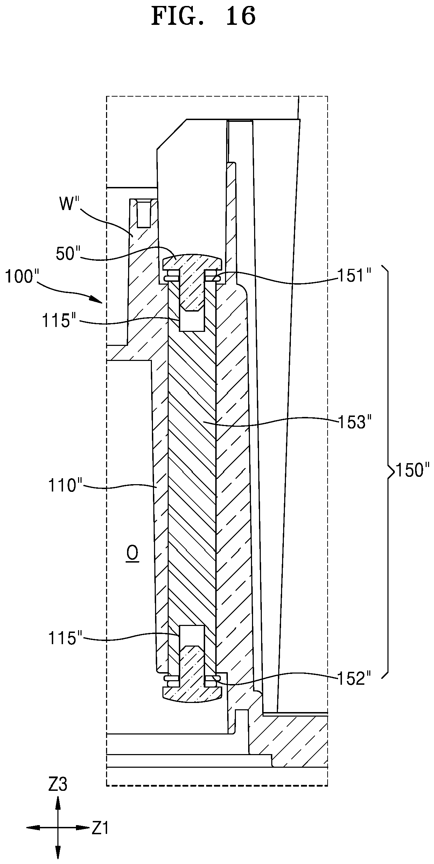

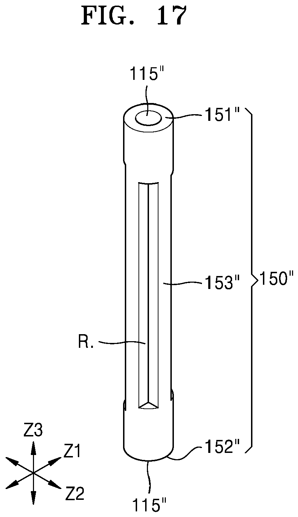

FIG. 15 is a perspective view of a housing 100" applicable to a battery pack, according to another embodiment. FIG. 16 is a cross-sectional view of the housing 100" of FIG. 15, taken along a line XVI-XVI. FIG. 17 is a perspective view of a bus bar illustrated in FIG. 16.

The housing 100" may accommodate a battery unit in an inner portion thereof, and a service terminal electrically connected to the battery unit may be in an outer portion of the housing 100". In an implementation, a first end 151" of a bus bar 150" electrically connected to the battery unit and a second end 152" of the bus bar 150" electrically connected to the service terminal may be in the inner portion and the outer portion O of the housing 100", respectively, and at least a portion of the bus bar 150" may be buried in the housing 100".

In an implementation, the first and second ends 151" and 152" of the bus bar 150" may be in the inner portion and the outer portion O of the housing 100", respectively, and may be supported on a step-difference block 110" forming an upper surface and a lower surface having a step difference with respect to each other. In an implementation, the first and second ends 151" and 152" of the bus bar 150" may be supported on the upper surface and the lower surface of the step-difference block 110", respectively, that are at the same horizontal location and have the step-difference with respect to each other.

In an implementation, as illustrated in FIG. 5, the first and second ends 151 and 152 of the bus bar 150 may be respectively at the front location and the rear location that are opposite to each other in the long side direction Z1, and thus, the first and second ends 151 and 152 of the bus bar 150 may be supported on the first and second step-difference blocks 110 and 120, respectively, that are at the front location and the rear location, respectively, that are adjacent to each other in the long side direction Z1. Unlike the embodiment illustrated in FIG. 5, according to the embodiment illustrated in FIG. 16, the first and second ends 151" and 152" of the bus bar 150" may be at the same location in the long side direction Z1 (e.g., the same lateral distance in the Z1 direction from the wall W) and may be supported on the upper surface and the lower surface of the step-difference block 110" at the same location in the long side direction Z1. The bus bar 150" may include the first and second ends 151" and 152" at both ends thereof and a main body 153" between the first and second ends 151" and 152". In an implementation, the bus bar 150' may extend in the height direction Z3 to have a columnar shape. In an implementation, at least a portion of the bus bar 150" may be buried in the step-difference block 110". In an implementation, the main body 153" of the bus bar 150" may be buried in the step-difference block 110". The step-difference block 110" may extend in a parallel direction with the main body 153" of the bus bar 150" to bury the main body 153" of the bus bar 150" and may extend in the height direction Z3 to have a columnar shape, while supporting the bus bar 150" extending in the height direction Z3.

In an implementation, a clamping portion 115" (into which a clamping member 50" for forming an electrical connection with the bus bar 150" may be inserted) may be in the first and second ends 151" and 152" of the bus bar 150". In an implementation, the clamping portion 115" may be integrally formed with the bus bar 150" (e.g., as a monolithic, one-piece unit). In an implementation, the clamping portion 115" may include a screw thread extending inwardly from the first and second ends 151" and 152" of the bus bar 150" toward the main body 153" of the bus bar 150" by a predetermined depth. In an implementation, the bus bar 150" may have a columnar shape in the height direction Z3 and may be formed as a cylindrically shaped member. In an implementation, both of the bus bars 150' and 150" illustrated in FIGS. 13 and 17, respectively, may have the columnar shape in the height direction Z3. In an implementation, the bus bar 150' illustrated in FIG. 13 may be formed as a member having a square-pillar shape, and the clamping portion 115' may be in the first and second ends 151' and 152' of the bus bar 150' as a separate member from the bus bar 150'. In an implementation, the bus bar 150" illustrated in FIG. 17 may be formed as the cylindrically shaped member, and the clamping portion 115" integrally formed with the bus bar 150" may be in the first and second ends 151" and 152" of the bus bar 150". The bus bar 150" may be generally formed as the cylindrically shaped member, and a screw thread may be formed on an inner circumferential surface of the bus bar 150" that is adjacent to the first and second ends 151" and 152", and a coupling groove R (for increasing adhesion with the housing 100") may be in an outer circumferential surface of the main body 153" that is relatively apart (e.g., inwardly spaced rom) from the first and second ends 151" and 152". In an implementation, a portion of the step-difference block 110" of the housing 100" may be inserted into the coupling groove R in the outer circumferential surface of the bus bar 150", so as to have an increased adhesion with the bus bar 150". In an implementation, the housing 100", in which at least a portion of the bus bar 150" is buried, may be formed via insert molding, and the housing 100", in which the at least the portion of the bus bar 150" is buried, may be formed by filling a mold in which the bus bar 150" is preliminarily fixed with fusion resins. In an implementation, the fusion resins may fill the coupling groove R in the outer circumferential surface of the bus bar 150", and thus, the adhesion between the bus bar 150" and the housing 100" may be increased. In an implementation, as illustrated in FIGS. 15 and 16, the housing 100" may include walls W".

By way of summation and review, in the case of a mobile device having a relatively great size, such as a notebook computer, an electric vehicle consuming relatively large power, or a device requiring an operation of a long duration and high power, such as a hybrid vehicle, a battery pack including a plurality of batteries is desired, for the output and the capacity, and an output voltage or an output current may be increased according to the number of equipped batteries.

According to one or more embodiments, a battery pack may be provided, whereby a fixing structure of a bus bar forming a connection between a battery unit in an inner portion of a housing and a service terminal in an outer portion of the housing may be improved, and thus, connection with the bus bar may become easy, and dense sealing may be realized between the inner portion of the housing, in which a portion of the bus bar is formed, and the outer portion of the housing, in which the other portion of the bus bar is formed.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack, comprising:
a battery unit;
a housing including an inner portion and an outer portion, the battery unit being accommodated in the inner portion, the outer portion including a service terminal therein that is electrically connected to the battery unit;
a bus bar including a first end and a second end, the first end being in the inner portion of the housing and connected to the battery unit, the second end being in the outer portion of the housing and connected to the service terminal such that at least a portion of the bus bar is buried in the housing;
a first sealing portion sealing the battery unit and the first end of the bus bar; and
a second sealing portion sealing the service terminal and the second end of the bus bar.

2. The battery pack as claimed in claim 1, wherein:
the bus bar further includes a main body connecting between the first end and the second end, and
the main body of the bus bar is buried in the housing, optionally the bus bar is integrally formed with the housing.

3. The battery pack as claimed in claim 2, wherein the first end, the second end, and the main body of the bus bar are supported by different portions of the housing.

4. The battery pack as claimed in claim 2, or 3 wherein the housing further includes a first step-difference block and a second step-difference block having different heights from each other and providing an upper surface having a step-difference, optionally the first step-difference block and the second step-difference block are adjacent to each other and contact each other.

5. The battery pack as claimed in claim 4, wherein:
the housing further includes walls defining an accommodation space in which the battery unit is accommodated, and
the walls, the first step-difference block, and the second step-difference block are sequentially adjacent to each other to contact each other in an inward direction from the walls toward the accommodation space.

6. The battery pack as claimed in claim 4 or 5, wherein:
the first end of the bus bar is supported on the first step-difference block, and
the second end of the bus bar is supported on the second step-difference block.

7. The battery pack as claimed in claim 6, wherein:
the main body of the bus bar is buried in the first step-difference block, and
the first end and the second end of the bus bar are bent from the main body of the bus bar in directions opposite to each other, respectively, so as to be supported on the first step-difference block and the second step-difference block, respectively, optionally the main body of the bus bar extends within the first step-difference block and in parallel with the first step-difference block.

8. The battery pack as claimed in claim 7, wherein:
the first end of the bus bar is on an upper surface of the first step-difference block, and
the second end of the bus bar is on a lower surface of the second step-difference block, optionally:
an upper surface of the first end of the bus bar that faces the inner portion of the housing and faces away from the first step-difference block is exposed at the inner portion of the housing,
a lower surface of the first end is buried in the first step-difference block,
a lower surface of the second end of the bus bar that faces the outer portion of the housing and faces away from the second step-difference block is exposed at the outer portion of the housing, and
an upper surface of the second end is buried in the second step-difference block.

9. The battery pack as claimed in claim 8, wherein:
an upper surface of the first step-difference block forms a part of an inner surface of the housing, and
a lower surface of the second step-difference block forms a part of an outer surface of the housing.

10. The battery pack as claimed in claim 8 or 9, further comprising a first clamping portion configured to fix a location of the first end of the bus bar, the first clamping portion extending inwardly from an upper surface of the first step-difference block to a predetermined coupling depth, the first end of the bus bar being on the upper surface of the first step-difference block, optionally the first clamping portion includes a screw thread therein, the first clamping portion being configured to form a screw joint with a clamping member penetrating through the first end of the bus bar.

11. The battery pack as claimed in claim 10, further comprising a second clamping portion configured to fix a location of the second end of the bus bar, the second clamping portion extending inwardly from a lower surface of the second step-difference block to a predetermined coupling depth, the second end of the bus bar being on the lower surface of the second step-difference block, optionally the first clamping portion and the second clamping portion do not vertically overlap each other.

12. The battery pack as claimed in any one of claims 2 to 11, wherein the housing includes a step-difference block that has an upper surface and a lower surface having a step-difference with respect to each other, optionally:
the first end of the bus bar is supported on the upper surface of the step-difference block, and
the second end of the bus bar is supported on the lower surface of the step-difference block, further optionally wherein:
the main body of the bus bar is buried in the step-difference block,
the first end of the bus bar extends from the main body of the bus bar in a same direction as the main body of the bus bar and is exposed at the upper surface of the step-difference block, and
the second end of the bus bar extends from the main body of the bus bar in a same direction as the main body of the bus bar and is exposed at the lower surface of the step-difference block.

13. The battery pack as claimed in any one of claims 1 to 12, further comprising a cover covering the inner portion of the housing, in which the battery unit is accommodated,
wherein the first sealing portion seals the battery unit by being between the cover and the housing.

14. The battery pack as claimed in any one of claims 1 to 13, further comprising a cover of the service terminal covering the outer portion of the housing, in which the service terminal is arranged,
wherein the second sealing portion seals the service terminal by being between the outer portion of the housing and the cover of the service terminal.

15. The battery pack as claimed in any one of claims 1 to 14, wherein a first projection area of the first sealing portion and a second projection area of the second sealing portion overlap with each other at a first overlap area, optionally each of the first projection area of the first sealing portion and the second projection area of the second sealing portion includes a second area not overlapping each other, further optionally wherein the second area of the first projection area of the first sealing portion and the second area of the second projection area of the second sealing portion are at opposite sides to the first overlap area.
